# EUROPÄISCHE PATENTSCHRIFT

(11) **EP 2 108 859 B1**
(45) Veröffentlichungstag und Bekanntmachung des Hinweises auf die Patenterteilung: **30.10.2019**
(21) Anmeldenummer: 09157465.7
(22) Anmeldetag: 07.04.2009
(51) Int. Cl.: F16F 15/10, F16H 57/00, F16F 15/12

(54) **Verfahren und System zur Schwingungsreduzierung im Antriebsstrang eines ein Getriebe umfassenden Kraftfahrzeugs**
Method and system for oscillation reduction in the power transmission of a motor vehicle including a gearbox
Procédé et système de réduction des vibrations dans le flux d'entraînement d'un véhicule automobile comprenant une boîte de vitesse

(30) Priorität: 08.04.2008 DE 102008001049
(43) Veröffentlichungstag der Anmeldung: 14.10.2009
(73) Patentinhaber: ZF Friedrichshafen AG, 88046 Friedrichshafen (DE)
(72) Erfinder: Feldhaus, Reinhard, 97502, Euerbach (DE); Fambach, Ralf, 97453, Schonungen (DE); Schade, Thomas, 97464, Niederwerrn (DE); Orlamünder, Andreas, 97453, Schonungen (DE)

(56) Entgegenhaltungen:
- DE-A1- 10 304 559
- DE-A1- 19 522 696
- US-A- 5 033 323

## Beschreibung

Die vorliegende Erfindung bezieht sich auf ein Verfahren zur Schwingungsreduzierung im Antriebsstrang eines ein Getriebe umfassenden Kraftfahrzeugs, gemäß dem Oberbegriff des Patentanspruchs 1. Des weiteren bezieht sich die Erfindung auf ein System zur Schwingungsreduzierung im Antriebsstrang eines ein Getriebe umfassenden Kraftfahrzeugs, insbesondere zur Durchführung des erfindungsgemäßen Verfahrens. Das Getriebe kann als Automatgetriebe, als automatisiertes Getriebe oder auch als manuell schaltbares Getriebe ausgebildet sein.

In Automatgetrieben werden die Gänge mittels einer hydraulischen, pneumatischen oder elektrischen Betätigung geschaltet, was durch eine entsprechende Steuereinheit erfolgt, die eng mit der Motorsteuerung zusammenarbeitet. In der Steuereinheit wird der jeweilige Zustand von Motor und Getriebe, beispielsweise die Drehzahl, das anstehende Drehmoment und/oder der eingelegte Gang mit dem Fahrerwunsch, der anhand von Signalen beispielsweise aus dem Fahrpedal, der Bremse und/oder dem Lenkrad vorliegt abgeglichen und nach vorher abgelegten Strategien beeinflusst.

Bei Automatgetrieben sind Betriebszustände bekannt, bei denen der Triebstrang zu Schwingungen neigt bzw. angeregt wird. Dies ist beispielsweise bei Lastwechseln aus Schub in Zug durch die Überbrückung von Spielen im Getriebe und in der Endübersetzung der Fall. In diesen Fällen ist bekannt, über eine teilweise übertriebene Motorlastschlagdämpfung, den Komfort möglichst gut darzustellen, was in nachteiliger Weise in einer Verschlechterung des angestrebten spontanen Ansprechverhaltens resultiert.

Ferner entstehen bei Automatgetrieben mit nasslaufenden Anfahrkupplungen im Anfahrbereich oft Reibschwingungen, welche wiederum zu Triebstrangschwingungen führen.

Des weiteren wird der Antriebsstrang durch die während des Verbrennungsprozesses auftretenden Drehungleichförmigkeiten der als Hubkolbenmotoren ausgeführten Verbrennungsmotoren zu Vibrationen angeregt, die sich auf das Getriebe, den Antriebsstrang und die angetriebene Achse übertragen und als störende Geräusche im Fahrzeug wahrnehmbar sind.

Diese Geräusche beeinträchtigten den Komfort und sorgen in zunehmendem Maße für hohe Gewährleistungskosten bei den Automobilherstellern. Verantwortlich dafür sind Gewichtsreduzierungen und die Optimierung der Fahrzeuge im Windkanal, da geringere Windgeräusche andere Geräuschquellen stärker hervortreten lassen und zu Beanstandungen führen. Zudem tragen Verbrennungsmotoren, die auf ein hohes Drehmomentniveau bei niedrigen Drehzahlen ausgelegt sind, zu mehr Schwingungen bei. In nachteiliger Weise erweist sich die Schwingungsdämpfung als problematisch, da sich der Drehzahlbereich der Verbrennungsmotoren mit der Resonanzfrequenz des Antriebsstrangs in der Regel überschneidet.

Aus dem Stand der Technik ist bekannt, bei Automatgetrieben als Drehschwingungsdämpfer wirkende Torsionsdämpfer einzusetzen, die im hydrodynamischen Wandler an der Wandlerkupplung angeordnet sind, um die Drehungleichförmigkeiten bei geschlossener Wandlerkupplung vom Antriebsstrang zu entkoppeln.

Durch das Prinzip des Zweimassenschwungrades, durch welches das konventionelle Kupplungsschwungrad in zwei Scheiben unterteilt wird, von denen der eine Teil mit der Kurbelwelle verbunden ist und dadurch das Massenträgheitsmoment des Motors erhöht, während der andere Teil dem Getriebe zugeordnet wird und dort das Massenträgheitsmoment erhöht, lässt sich eine geänderte Zuordnung der Massenträgheitsmomente und damit eine Verschiebung der Resonanzdrehzahl erreichen. Wird das Getriebemassenträgheitsmoment erhöht, so sinkt die Resonanzdrehzahl unter die Leerlaufdrehzahl und liegt damit außerhalb des Betriebsdrehzahlbereichs des Motors, so dass Schwingungen bzw. Vibrationen und damit Geräusche weitgehend reduziert werden können.

Ein Beispiel eines Planeten-Zweimassenschwungrades ist in der Firmenschrift System Partners 99 der Firma Mannesmann Sachs in einem Artikel von Benedikt Schauder und Bernhard Schierling auf Seiten 64 bis 70 beschrieben. Der wesentliche Anteil des Momentenflusses bei diesem bekannten Planeten-Zweimassenschwungrad wird über das Primärschwungrad und einen Federsatz an ein Hohlrad weitergeleitet, welches direkt mit der Sekundärschwungmasse verbunden ist. Im Federsatz erfolgt eine starke Reduzierung der Drehungleichförmigkeit. Die Räder des zugeordneten Planetengetriebes werden bei hohen Drehungleichförmigkeiten stark beschleunigt und wirken durch ihren Trägheitswiderstand und ihre Dämpfung diesen Schwingungen entgegen. Dabei sind die Planetenräder durch Wellfedern axial vorgespannt, wobei die Lagerung dieser Räder auf Achszapfen erfolgt, die beim Umformen des Primärbleches einbaufertig gezogen werden. Zwischen Primär- und Sekundärmasse ist eine Gleitlagerung vorgesehen, wobei Axiallagerung und Radiallagerung getrennt voneinander ausgeführt sind. Nach dem Stand der Technik kann das verwendete Federelement als Gasfeder ausgeführt sein.

Ein weiteres Beispiel eines Zweimassenschwungrades mit Torsiondämpfung ist aus der DE A 198 41 495 bekannt. Diese bekannte Vorrichtung zur Drehmomentübertragung und zur Torsionsdämpfung weist eine erste Schwungscheibe und eine zweite Schwungscheibe auf, wobei die beiden Schwungscheiben koaxial zueinander angeordnet sind, sich um eine gemeinsame Achse drehen und relativ gegeneinander verdrehbar sind. Zwischen den beiden Schwungscheiben ist ein Torsionsdämpfer angeordnet, der eine mit entweder der ersten Schwungscheibe oder der zweiten Schwungscheibe rotierende Mitnehmerscheibeneinheit, eine mit der jeweils anderen Schwungscheibe rotierende Dämpfernabe und eine zwischen der Mitnehmerscheibeneinheit und der Dämpfernabe eine elastische Verdrehbarkeit gegeneinander ermöglichende Federeinheit aufweist. Die Mitnehmerscheibeneinheit weist einen radialen äußeren Umfang und einen radialen inneren Umfang bezüglich der Achse auf, mit einer unmittelbar an dem radialen inneren Umfang der Mitnehmerscheibeeinheit angeordneten ersten Kupplung, welche die Mitnehmerscheibeneinheit mit einer der Schwungscheiben verbindet und mit einer unmittelbar an dem radialen äußeren Umfang der Mitnehmerscheibeneinheit angeordneten zweiten Kupplung, welche die Mitnehmerscheibeneinheit mit einer der Schwungscheiben verbindet.

Ein Beispiel einer Torsionsdämpfung für Kraftfahrzeuge ist auch aus der DE A 199 39 097 bekannt. Der darin beschriebenen Torsionsdämpfer weist zwei koaxial drehbar zueinander gelagerte Teile mit zwischen ihnen eingefügten umfangsmäßig wirksamen elastischen Mitteln auf, die in einem ringförmigen Hohlraum aufgenommen sind, der um eine mittige Nabe eines der Teile herum ausgebildet ist, mit einem an dieser Nabe angeordneten Zentriermittel zur Zentrierung des anderen Teils und einer Reibungseinheit, die eine Reibscheibe umfaßt, die mit Spiel mit einem der Teile in Eingriff kommt und gegen eine Reibfläche des anderen Teils unter der Beanspruchung durch ein axial wirksames elastisches Mittel angedrückt wird. Der um die mittige Nabe herum verfügbare Zwischenraum, der sich axial zwischen einem Flansch des Teils, der ihn trägt, und einer Auflagescheibe erstreckt, wird vollständig von der Reibungseinheit eingenommen, wobei ein Innenring des anderen Teils und das Zentriermittels dieses Rings wenigstens einen L-förmigen Lagerring mit einem radialen Schenkel umfassen, der ein axiales Sicherungsmittel bildet. Dadurch soll mit einem Minimum an Mitteln eine kompakte und effiziente Baueinheit gebildet werden, die die Möglichkeit einer Platzeinsparung im Bereich der Achse des Dämpfers bietet, vor allem durch die Möglichkeit, den Innenring an die mittige Nabe anzunähern, wobei er gleichzeitig derart angeordnet ist, dass gegenüber dem Flansch, der diese Nabe trägt, eine ringförmige Aufnahme für Elemente der Reibungseinheit, sowie eine geeignete Reibauflagefläche gebildet werden.

Die bekannten Lösungen zur Schwingungsreduzierung erfordern in nachteiliger Weise viel Bauraum, wobei aufgrund der steigenden Drehungleichförmigkeiten moderner Motoren die Bauraumerfordernisse steigen, so dass der in der Kupplungsglocke zur Verfügung stehende Bauraum nicht ausreicht; zudem wird versucht, durch die bekannten Lösungen pauschal alle Vibrationen zu reduzieren, was einen Kompromiss darstellt, da Eigenformen der Schwingungen vom jeweils geschalteten Gang abhängen.

Aus der WO/2004/043725 ist ein Verfahren zur Schwingungsdämpfung eines mittels einer Anzahl von Lagerelementen an einem Kraftfahrzeug befestigten Schwingungssystems bekannt, welches die Abgasanlage, den Motor und/oder das Getriebe umfasst. Bei dem bekannten Verfahren wird vorgeschlagen, dass die einzelnen Lagerelemente der Abgasanlage, des Motors und/oder des Getriebes veränderbare Steifigkeiten aufweisen, die in Abhängigkeit voneinander und in Abhängigkeit von den Betriebszuständen des Kraftfahrzeugs eingestellt werden.

Aus der DE 102005007566 B4 ist einen Kupplungsanordnung umfassend einen Schwingungsdämpfer bekannt. Sie umfasst eine Nabe mit einer Nabenreibfläche und einer Innenfläche auf, die zusammenwirken, um einen Hohlraum zu definieren, wobei innerhalb des Hohlraums ist ein Dämpfungsring angeordnet ist, der mit der Nabenreibfläche in Kontakt steht, um Vibrationen zu minimieren. Hierbei ist ein Einrückelement vorgesehen, welches eine axiale Kraft in Richtung der Nabenreibfläche auf den Dämpfungsring ausüben kann.

Ferner ist aus der DE 69834833 T2 eine planare Kupplungsbaugruppe bekannt, welche ein Dämpfungselement umfasst, das vorzugsweise als elastischer Einsatz ausgeführt ist, welches einen Metallträger aufweisen kann.

Aus der US 7029417 B2 ist ein Getriebe in Planetenbauweise bekannt, bei dem eine der Kupplungen einen Torsionsdämpfer aufweist.

Aus der US 5 033 323 A ist ein Getriebe mit einem integrierten Dämpfer bekannt.

Der vorliegenden Erfindung liegt die Aufgabe zugrunde, ein Verfahren zur Schwingungsreduzierung im Antriebsstrang eines ein Getriebe umfassenden Kraftfahrzeugs anzugeben, durch dessen Durchführung die Schwingungsreduzierung auf einzelne geschaltete Gänge und Schaltungsvarianten hin optimiert wird. Zudem soll zur Durchführung des erfindungsgemäßen Verfahrens eine möglichst geringe Anzahl zusätzlicher Bauteile benötigt werden. Des weiteren soll ein System zur Schwingungsreduzierung im Antriebsstrang eines ein Getriebe umfassenden Kraftfahrzeugs angegeben werden, was insbesondere zur Durchführung des erfindungsgemäßen Verfahrens geeignet ist.

Diese Aufgabe wird für ein Verfahren durch die Merkmale des Patentanspruchs 1 gelöst. Ein Getriebe mit einem System zur Schwingungsreduzierung im Antriebsstrang eines ein Getriebe umfassenden Kraftfahrzeugs ist Gegenstand des Patentanspruchs 3. Weitere vorteilhafte Ausgestaltungen und Vorteile gehen aus den entsprechenden Unteransprüchen hervor. Sowohl das Verfahren als auch das System ist für ein Automatgetriebe, ein automatisiertes Getriebe und ein manuell schaltbares Getriebe geeignet.

Demnach werden im Rahmen des erfindungsgemäßen Verfahrens im Getriebe mehrere schwingungsfähige Systeme zur Schwingungsentkopplung geschaffen, wobei die Massenträgheiten der schwingungsfähigen Systeme durch vorhandene rotierende Teile des Getriebes gebildet werden und wobei in den rotierenden Teilen Stahl- oder Gasfedersteifigkeiten und/oder Zusatzmassen eingebracht werden.

Gemäß der Erfindung werden hierbei durch unterschiedliche den rotierenden Bauteilen zugeordnete Stahl- oder Gasfedersteifigkeiten und/oder Zusatzmassen gangabhängige Steifigkeiten erzeugt werden, wodurch für mehrere oder für alle Gänge des Getriebes gangabhängig ein entkoppeltes, dem jeweiligen Gang zugeordnetes schwingungsfähiges System innerhalb des Getriebes erzeugt wird, das auf schaltungsspezifische Eigenfrequenzen und Eigenformen abgestimmt ist.

Hierbei kann durch das hier vorgestellte Verfahren für mehrere oder auch für alle Gänge des Getriebes ein dem jeweiligen Gang zugeordnetes schwingungsfähiges System geschaffen werden, um die Eigenfrequenzen und Eigenformen im jeweiligen Gang gezielt zu bekämpfen.

Automatgetriebe nach dem Stand der Technik können eine oder mehrere Getriebeeingangswellen aufweisen und umfassen in der Regel Stirnrad- oder Planetenverzahnungen. Hierbei weisen Planetenverzahnungen die Eigenschaft eines besonders hohen Massenträgheitsmomentes, insbesondere von Hohlrad- und Planetenträgerbaugruppen auf, welches in Abhängigkeit von der aktuellen Schaltung das Schwingungsverhalten des Antriebsstrangs des Fahrzeugs hinsichtlich Eigenform und Eigenfrequenz bestimmt. Zudem weisen Automatgetriebe Bauteile auf, welche sich mit Relativwinkeln,- geschwindigkeiten und - beschleunigungen zueinander bewegen.

Gemäß der Erfindung werden diese Relativbewegungen von Getriebebauteilen zueinander zum Zwischenschalten von trockenen/coulombschen und/oder von flüssigen/geschwindigkeitsproportionalen Steifigkeiten und Dämpfungen verwendet, wobei die Steifigkeiten und Dämpfungen mittels Schaltelemente zu- und abschaltbar ausgeführt sein können.

Durch die verschiedenen Übersetzungsverhältnisse im Getriebe bewegen sich einige Bauteile mit hoher Drehzahl, so dass in diesen Fällen gemäß der Erfindung zur Dämpfung Fliehmassen wie z.B. drehzahladaptive Tilger eingesetzt werden, da die zur Erzeugung ausreichender Rückstellkräfte notwendigen Massen wegen der hohen Drehzahl der Bauteile in vorteilhafter Weise sehr klein ausfallen können.

Um eine ausreichende Schwingungsentkopplung zu gewährleisten, sind niedrige Steifigkeitswerte bei geringen Dämpfungen vorteilhaft, wobei eine starke Dämpfung vorteilhaft ist, wenn das System in der Nähe einer Resonanzstelle betrieben wird. Der Einsatz von Tilgern richtet sich daher entweder auf eine isolierte Frequenz oder auf eine isolierte Ordnung. Folglich werden Tilger für ausgeprägte Störschwingungen, beispielsweise für die Zündordnung des Verbrennungsmotors oder für eine Antriebsstrangeigenfrequenz in einem bestimmten Gang ausgelegt.

Ferner weisen Automatgetriebe und automatisierte Getriebe ein Aktuatorsystem auf, mittels dessen Schaltelemente oder Synchronisierungseinrichtungen hydraulisch oder elektromotorisch/-magnetisch geschaltet werden können. Gemäß der Erfindung wird vorgeschlagen, das vorhandene Aktuatorsystem direkt zum Ansteuern bzw. Aktivieren bzw. Zuschalten von Steifigkeiten und Dämpfungen zu nutzen, wobei im Rahmen weiterer Ausführungsformen weitere Aktuatoren in das vorhandene Aktuatorsystem integriert werden, um je nach Betriebs- und Schaltungszustand das Schwingungsverhalten des Getriebes so zu verändern, dass sich insbesondere Drehungleichförmigkeiten des Verbrennungsmotors nicht nachteilig akustisch auswirken können.

Um eine Entkopplung in einem Kettenschwingersystem, wie in einem Antriebsstrang zu gewährleisten, müssen im einfachsten Fall zwei Energiespeicherarten vorhanden sein. Erfindungsgemäß sind zur Entkopplung jeweils zwei Massenträgheiten vorgesehen, welche mit einer Steifigkeit verbunden sind und auf diese Weise ein schwingungsfähiges System bilden. Hierbei werden die Massenträgheiten durch rotierende Teile des Getriebes gebildet, nämlich durch die Wellen, die Planeten-, Sonnen-, Hohl- und Stirnräder sowie die Schaltelemente. Da in Getrieben nach dem Stand der Technik die Wellen baulich sehr steif und wenig elastisch ausgeführt sind, werden gemäß der Erfindung schwingungsfähige Systeme dadurch geschaffen, dass in den rotierenden Teilen zusätzlich Stahl- oder Gasfedersteifigkeiten eingebracht werden.

Da ein Getriebe je nach eingelegtem Gang unterschiedlich übersetzt und aufgrund der unterschiedlichen beteiligten rotierenden Bauteile unterschiedlich steif ist, werden durch die erfindungsgemäße Konzeption gangabhängige Steifigkeiten erzeugt, wodurch je nach Schaltung auf spezielle schaltungsspezifische Eigenfrequenzen und Eigenformen reagiert werden kann.

Durch den Einsatz von Elektromotoren in Getrieben im Rahmen von Hybridkonzepten steht elektrische Energie in ausreichender Höhe zur Verfügung, die gemäß einer Weiterbildung der Erfindung derart genutzt wird, dass durch Aufmodulation von Oberwellen in der Leistungsversorgung wechselnde oder schwellende Drehmomente erzeugt werden, wodurch alleine oder in Kombination mit dem bereits beschriebenen Maßnahmen eine Verbesserung der Schwingungsentkopplung im Getriebe erzielt werden kann.

Das erfindungsgemäße Verfahren kann auch in Kombination mit aus dem Stand der Technik bekannten Schwingungsreduzierungssystemen wirken oder diese Maßnahmen ergänzen.

Das Verfahren sowie ein System zur Schwingungsreduzierung im Antriebsstrang eines ein Getriebe umfassenden Kraftfahrzeugs, insbesondere zur Durchführung des erfindungsgemäßen Verfahrens werden im Folgenden anhand der beigefügten Figuren beispielhaft näher erläutert.

In diesen stellen dar:
- Fig. 1: Eine schematische Ansicht eines 8-Gang-Automatgetriebes in Planetenbauweise nach dem Stand der Technik;
- Fig. 2: Eine schematische Ansicht eines 6-Gang-Stirnradgetriebes nach dem Stand der Technik;
- Fig. 3: Eine schematische Ansicht eines Automatgetriebes in Planetenbauweise umfassend ein System zur Schwingungsreduzierung gemäß einer ersten Ausführungsform der Erfindung;
- Fig. 4: Eine schematische Ansicht eines Automatgetriebes in Planetenbauweise umfassend eine weitere Ausführungsform eines erfindungsgemäßen Systems zur Schwingungsreduzierung gemäß einer zweiten Ausführungsform der Erfindung;
- Fig. 5: Eine schematische Ansicht eines Automatgetriebes in Planetenbauweise umfassend eine weitere Ausführungsform eines erfindungsgemäßen Systems zur Schwingungsreduzierung gemäß einer weiteren Ausführungsform der Erfindung; und
- Fig. 6-15: Schematische Ansichten weiterer Ansichten von Automatgetrieben, umfassend unterschiedliche Ausführungsformen eines Systems zur Schwingungsreduzierung gemäß der Erfindung.

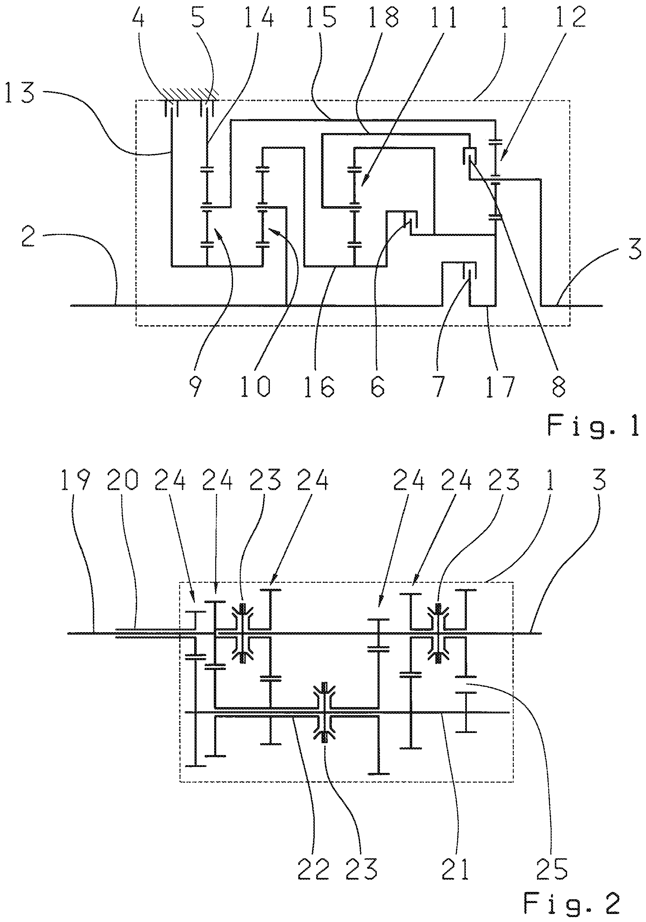

In Figur 1 ist ein Automatgetriebe in Planetenbauweise nach dem Stand der Technik dargestellt, welches sich für den Einbau in einen Heck-Längs-Antriebsstrang eignet; hierbei ist der Motor vorne in Längsrichtung angeordnet, wobei die vom Motor angetriebene Achse die Heckachse des Fahrzeugs ist. Da derartige Getriebe bezogen auf die Ein- und Ausgangswelle symmetrisch ausgeführt sind, ist in der Figur nur die eine Hälfte des Getriebes dargestellt.

Das gezeigte Getriebe umfasst vier Planetensätze 9, 10, 11, 12 sowie drei Kupplungen 6, 7, 8 und zwei Bremsen 4, 5, die in einem Getriebegehäuse 1 angeordnet sind und deren selektives Schalten verschiedene Übersetzungsverhältnisse zwischen der Getriebeeingangswelle 2 und der Getriebeausgangswelle 3 bewirkt, so dass acht Vorwärtsgänge und ein Rückwärtsgang realisierbar sind.

Die Getriebeeingangswelle 2 leitet das Drehmoment des Motors an das Getriebe über einen nicht dargestellten hydrodynamischen Wandler oder eine geeignete Kupplung, beispielsweise eine Nasslaufkupplung, wobei die Getriebeausgangswelle 3 das Drehmoment an eine nicht dargestellte Gelenkwelle oder direkt in ein Achsgetriebe überträgt. Für den Fall, dass ein Achsgetriebe vorgesehen ist, kann dieses in das Getriebegehäuse 1 integriert sein, wodurch übliche Front-Quer-Anordnungen realisiert werden können.

Die Drehmomentleitung zwischen den Planetensätzen 9, 10, 11, 12 des Getriebes erfolgt mittels des Sonnen- und Hohlradträgers 17, des Sonnenradträgers 13, des Sonnen- und Hohlradträgers 16, des Planeten- und Hohlradträgers 15, des Planetenträgers 18 und des Hohlradträgers 14. Diese Bauteile stellen, solange die zwischen ihnen angeordneten Kupplungen und die zwischen ihnen und der Umgebung angeordneten Bremsen geöffnet sind, verschiedene Bewegungsfreiheitsgrade dar. Durch Weglassen oder Hinzufügen einzelner Baugruppen können auch Getriebe mit weniger oder mehr Gängen realisiert werden.

Gegenstand der Figur 2 ist ein als Doppelkupplungsgetriebe ausgeführtes Stirnradgetriebe nach dem Stand der Technik. Hierbei sind innerhalb eines Getriebegehäuses 1 zwei Teilgetriebe mit verschiedenen Zahnradpaaren angeordnet, die über eine innere Getriebeeingangswelle 19 und eine äußere, als Hohlwelle ausgebildete Getriebeeingangswelle 20 ein Drehmoment abhängig vom Schaltzustand einer nicht dargestellten vorgeschalteten Doppelkupplung erhalten.

Hierbei sind die Gänge abwechselnd in den zwei Teilgetrieben angeordnet, so dass es möglich ist, einen Gang im lastfreien Teilgetriebe vorzuwählen, während das Drehmoment vom anderen Teilgetriebe übertragen wird. Eine Gangschaltung wird realisiert, indem das zu übertragende Drehmoment von der einen Kupplung an die andere übergeben wird, so dass die Gänge lastfrei und ohne Zugkraftunterbrechung sowie ohne Verspannung der schaltbaren Gänge geschaltet werden können.

Über die Getriebeausgangswelle 3 wird das übersetzte Drehmoment an eine nicht dargestellte Gelenkwelle oder direkt in ein Achsgetriebe des Fahrzeugs weitergeleitet, wobei für den Fall, dass ein Achsgetriebe vorgesehen ist, in oben beschriebener Weise eine Front-Quer-Anordnung realisiert werden kann.

Bei dem gezeigten Stirnradgetriebe sind zwei Vorgelegewellen 21 und 22 vorgesehen, welche das Drehmoment aus den mittels Synchronisierungseinrichtungen 23 geschalteten Stirnradsätzen 24 weiterleiten. Das in Figur 2 gezeigte Getriebe umfasst auch eine Rückwärtsgangstufe 25, wobei das hinter der Schnittebene gelegene Zwischenrad zur Drehrichtungsumkehr nicht dargestellt ist.

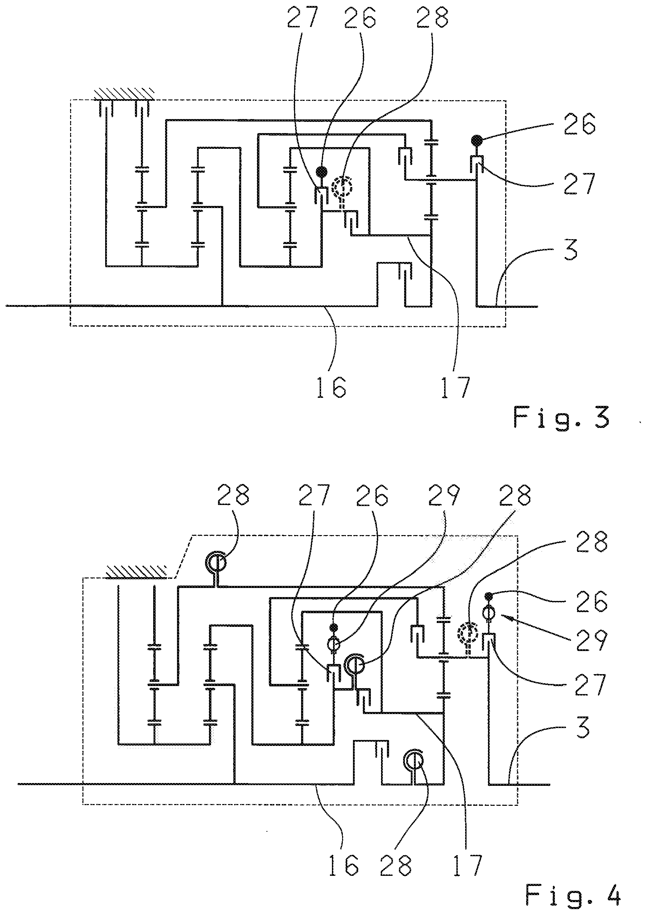

In Figur 3 ist ein Automatgetriebe in Planetenbauweise gezeigt, umfassend erfindungsgemäße Einrichtungen zur Schwingungsdämpfung. Gemäß der Erfindung wird die Massenträgheit zumindest einer rotierenden Komponente des Getriebes mittels einer Zusatzmasse 26 erhöht, was zu einer Schwingungsdämpfung bzw. Beruhigung des Antriebsstranges führt, da eingebrachte Störwinkelbeschleunigungen bei der Beschleunigung der erhöhten Massen der rotierenden Komponenten aufgebraucht werden.

Bei dem gezeigten Beispiel ist die Masse des vorderen Hohl- und Sonnenradträgers 16 und der Getriebeausgangswelle 3 erhöht. Da diese Massen nicht nur Störbeschleunigungen sondern auch der Nutzdrehbeschleunigung, beispielsweise für den Fall einer Fahrzeugbeschleunigung entgegenwirken, wird im Rahmen einer Weiterbildung der Erfindung vorgeschlagen, diese Zusatzmassen durch Schaltelemente 27 zu- und abschaltbar auszuführen. Vorzugsweise wird zur Schaltung der Schaltelemente 27 die vorhandene Steuerung der Schaltelemente des Getriebes verwendet.

Die Zusatzmassen 26 können auch an weiteren Bauteilen des Getriebes vorgesehen sein; des weiteren können diese Massen auch in Kombination mit einer optionalen zusätzlichen Dreh - Steifigkeit 28, beispielsweise in Form eines verformbaren, ringförmigen Zwischenelementes bzw. einer Stahlfeder-Steifigkeit oder einer Gasfedersteifigkeit eingesetzt werden, wie in Figur 3 dargestellt, wodurch gangabhängig ein entkoppeltes schwingungsfähiges System innerhalb des Getriebes erzeugt werden kann. Die Steifigkeit 28 ist am gleichen rotierenden Bauteil angebracht, wie die Zusatzmasse 26.

Des weiteren können die Zusatzmassen 26, die in Figur 3 gezeigt sind, über eine Steifigkeit 28 angebunden werden, wodurch ein Festfrequenztilger 29 entsteht, mit dessen Eigenfrequenz keine Schwingung im Grundteil, beispielsweise in der Getriebeausgangswelle 3 oder im Hohl- und Sonnenradträger 16 auftritt. Hier ist der Tilger ohne eine gemäß weiterer Ausführungsformen vorgesehene und zur Steifigkeit 28 parallelgeschaltete Reibeinrichtung zur Entnahme von Schwingungsenergie dargestellt, was in einer schmalbandigen Tilgerwirkung auf seine Eigenfrequenz resultiert. Ferner sind bei dem in Figur 4 gezeigten Ausführungsbeispiel weitere Steifigkeiten 28 vorgesehen, die am Sonnen- und Hohlradträger 17 und am Planeten- und Hohlradträger 15 angebracht sind.

Um eine breitbandige Wirkung eines Frequenztilgers 29 zu erzielen, kann eine aus dem Stand der Technik an sich bekannte Reibung eingebaut werden. Wie Figur 4 zu entnehmen. sind die massebehafteten Festfrequenztilger 29 vorzugsweise zur Erhöhung der Fahrzeugdynamik über Schaltelemente 27 zu- und abschaltbar ausgeführt.

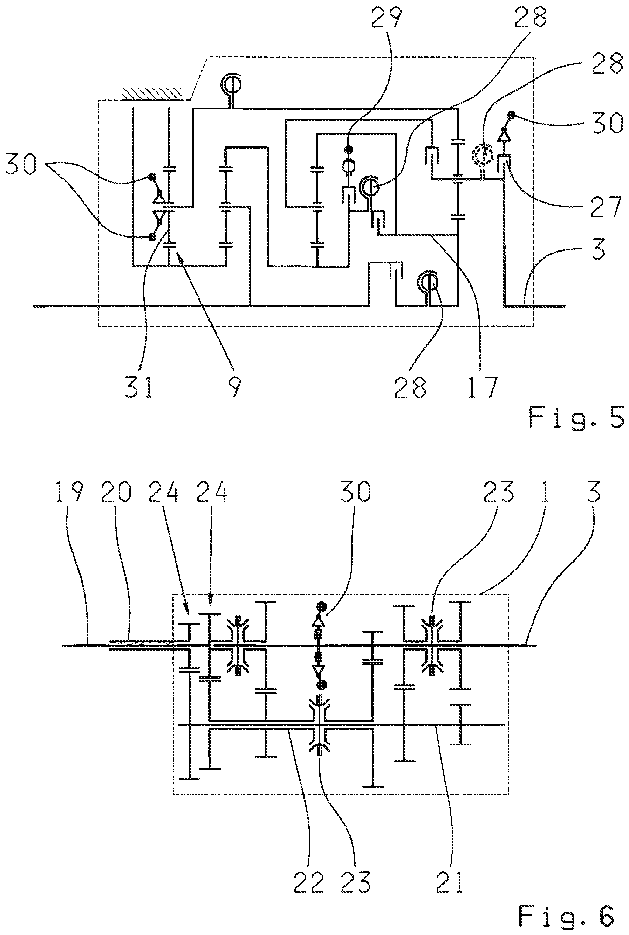

Bei dem Ausführungsbeispiel eines Automatgetriebes in Planetenbauweise gemäß Figur 5 sind im Getriebe alternativ oder zusätzlich zu den Zusatzmassen 26 zumindest ein drehzahladaptiver Tilger 30 vorgesehen. Mittels eines drehzahladaptiven Tilgers kann eine Ordnung in einem bestimmten Gang, beispielsweise die Zündordnung, getilgt werden; hierbei wird mitlaufend mit der Drehzahl eine Reduzierungswirkung erzielt.

Vorzugsweise ist der zumindest einer drehzahladaptiver Tilger 30 an ein schnell rotierendes Bauteil des Getriebes befestigt, wodurch die Tilgermasse in vorteilhafter Weise minimiert wird. Bei dem gezeigten Beispiel ist ein Tilger am Planetenrad 31 des Planetensatzes 9 befestigt. Zudem ist ein weiterer drehzahladaptiver Tilger 30 an der Getriebeausgangswelle 3 befestigt; die Tilger können über ein Schaltelement 27 zu- und abschaltbar ausgeführt sein, wie es bei dem gezeigten Beispiel beim Tilger 30 an der Getriebeausgangswelle 3 der Fall ist.

Gemäß der Erfindung können drehzahladaptive Tilger auch in einem Stirnradgetriebe eingesetzt werden, wie anhand Figur 6 veranschaulicht. Hierbei ist ein drehzahladaptiver Tilger 30 auf der Getriebeausgangswelle 3 des Getriebes angebracht. Dadurch werden je nach gewählter Übersetzung andere Ordnungen bezogen auf die Eingangsdrehzahl getilgt. Ein drehzahladaptiver Tilger kann auch an weiteren Stellen im Getriebe, vorzugsweise an schnell rotierenden Bauteilen, beispielsweise an der inneren Vorgelegewelle 21 des Getriebes angebracht werden.

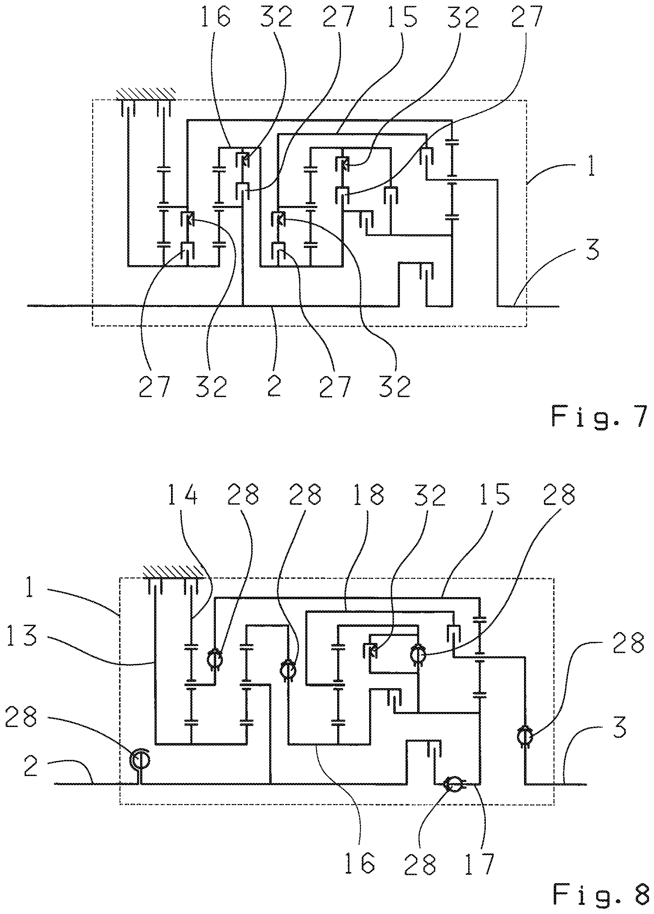

In Figur 7 ist eine weitere Ausführungsform eines Getriebes in Planetenbauweise gemäß der Erfindung gezeigt; hierbei wird von der Tatsache ausgegangen, dass in einem derartigen Getriebe je nach Schaltung mehrere Bauteile verschiedene rotatorische Freiheitsgrade aufweisen. Diese Freiheitsgrade können über eine mit einer Schaltkupplung 27 schaltbare Reibeinrichtung 32 zur Entnahme von Schwingungsenergie genutzt werden, indem die Schwingungsenergie in durch Reibung erzeugte Wärme umgewandelt wird; dadurch wird im Getriebe zumindest eine schaltbare Dämpfung zur Verfügung gestellt. Bei geschalteter Schaltkupplung 27 werden vorzugsweise zwei rotierende Bauteile, beispielsweise der Hohl- und Sonnenradträger 16 und der Planeten- und Hohlradträger 15, über die Reibeinrichtung 32 miteinander verbunden.

Um hohe Verlustleistungen aufgrund der entstehenden Reibung zu vermeiden, wird gemäß einer vorteilhaften Weiterbildung der Erfindung vorgeschlagen, die Schaltkupplungen 27 gepulst zu schließen, wobei dies vorzugsweise mit der Frequenz der überlagerten Störbeschleunigung oder mit einem Teil bzw. mit einem ganzzahligen Vielfachen derselben erfolgt.

Im Getriebe können gemäß der Erfindung eine oder mehrere schaltbare Reibeinrichtungen gleichzeitig oder je nach Gangwahl vereinzelt wirken.

Gegenstand der Figur 8 ist ein Automatgetriebe in Planetenbauweise, bei dem im Getriebegehäuse 1 eine oder mehrere Steifigkeiten 28, die vorzugsweise als Stahlfeder-Steifigkeiten ausgeführt sind, in die Leistungsflüsse eingebaut sind. Wie aus Figur 8 ersichtlich, ist bei dem gezeigten Beispiel eine Steifigkeit 28 direkt auf der Getriebeeingangswelle 2 angeordnet, welche die Steifigkeit ersetzen kann, die außerhalb des Getriebegehäuses 1 innerhalb der Kupplungsglocke angeordnet sein kann. Die Steifigkeiten 28 können zudem auf den Trägern 13, 14, 15, 16, 17 und/oder 18 angeordnet sein. Bei dem in Figur 8 gezeigten Beispiel ist zur Entnahme von Schwingungsenergie parallel zu einer Steifigkeit eine Reibeinrichtung 32 geschaltet.

Die Steifigkeiten 28 können derart ausgeführt sein, dass Schraubendruckfedern in tangentialer Richtung komprimiert und durch Bleche angesteuert werden, in deren Fenster sie liegen. Alternativ können als Steifigkeiten aus den Zweimassenschwungrädern (ZMS) bekannte Anordnungen eingesetzt werden, umfassend Federtellern und Gleitschuhen, wobei die Gleitschuhe in einem Kanal gleiten und dadurch die Federn gegen die Fliehkraft führen und somit eine Umlenkung der Federkräfte bewirken.

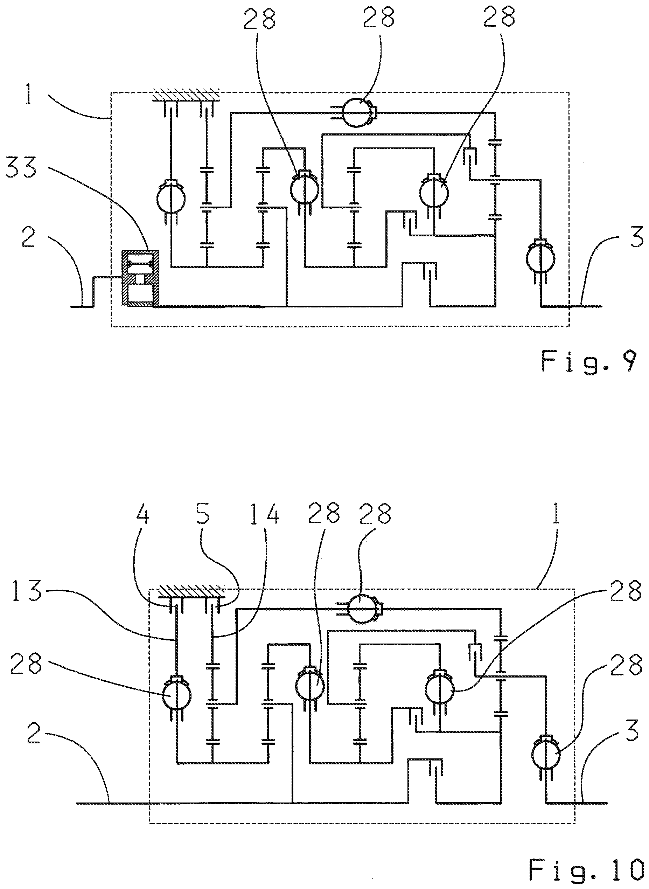

Alternativ zu der Ausführungsform gemäß Figur 8 kann, wie im Rahmen der Figur 9 gezeigt, an der Getriebeeingangswelle 2 anstelle einer herkömmlichen Steifigkeit 28 eine Gasfedersteifigkeit 33 angeordnet sein, was in dem Vorteil resultiert, dass die Hydraulikversorgung der Gasfedersteifigkeit 33 über die Hydrauliksteuerung des Getriebes erfolgen kann.

Gemäß einer Weiterbildung der Erfindung, die in Figur 10 gezeigt ist, ist vorgesehen, dass die Wellen bzw. Träger 13, 14 des Getriebes, die über eine Bremse 4, 5 an ein Getriebegehäuse 1 ankoppelbar sind, über eine Steifigkeit 28 an das Getriebegehäuse 1 ankoppelbar ausgeführt sein können; dies resultiert in dem Vorteil, dass die Steifigkeit 28 nicht der aus der Rotation resultierenden Fliehkraft unterworfen ist, wodurch sie besonders reibungs- und verschleißarm wirken kann. Bei dem gezeigten Beispiel ist ein Teil 13 des Getriebes, der mit dem Getriebegehäuse 1 mittels der Bremse 4 verbindbar ist, über die Steifigkeit 28 an das Gehäuse 1 ankoppelbar.

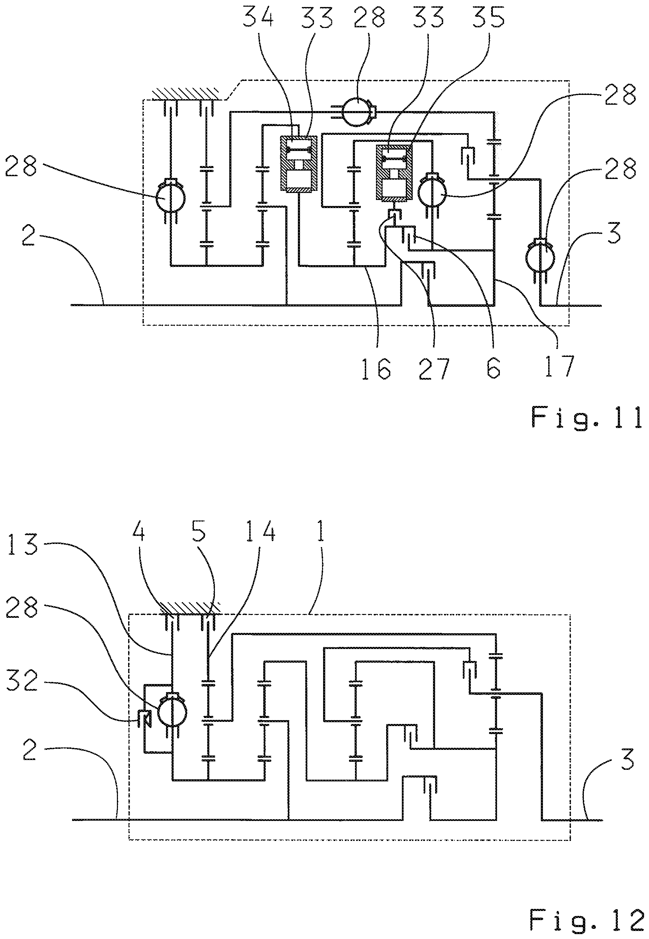

Erfindungsgemäß und bezugnehmend auf Figur 11 kann auch vorgesehen sein, dass in einem Automatgetriebe in Planetenbauweise Gasfedersteifigkeiten 33 in zumindest einen Leistungspfad 34 oder in einer Stelle 35 zwischen zwei Bewegungsebenen bzw. Freiheitsgraden angeordnet werden. Wenn eine Verbindung zwischen zwei Freiheitsgraden bzw. zwei Trägern 16, 17 hergestellt wird, wird die Gasfedersteifigkeit 33 mittels eines Schaltelementes 27 geschaltet, um die Grundfunktion der Schaltbarkeit des Getriebes nicht zu beeinträchtigen. Auf diese Weise wird eine gezielte gangabhängige Schwingungsreduzierung ermöglicht. Anstelle einer Gasfedersteifigkeit kann auch eine Stahlfeder-Steifigkeit verwendet werden.

Bei dem in Figur 12 gezeigten erfindungsgemäßen Ausführungsbeispiel ist analog zum Ausführungsbeispiel aus Figur 10 ein Teil des Getriebes, nämlich der Sonnenradträger 13, der mit dem Getriebegehäuse 1 über die Bremse 4 verbindbar ist, über eine vorzugsweise als Stahlfeder-Steifigkeit ausgeführte Steifigkeit 28 angebunden, wobei zur Bedämpfung eine zur Steifigkeit 28 parallelgeschaltete Reibeinrichtung 32 dient, die trocken- oder nasslaufend ausgeführt sein kann. Im Fall einer nasslaufenden Reibeinrichtung entsteht der Vorteil, dass diese zur Abfuhr der Wärmeleistung aus der Reibung an den Ölkreislauf des Getriebes angeschlossen werden kann.

Hierbei kann die Bremse 4 wirkungsmäßig in Kraftflussrichtung auch vor der Steifigkeit 28 bzw. der Reibeinrichtung 32 angeordnet sein, was besonders vorteilhaft ist, da dadurch die Steifigkeit 28 sogar im unbetätigten Zustand der Bremsen 4 oder 5 stillsteht.

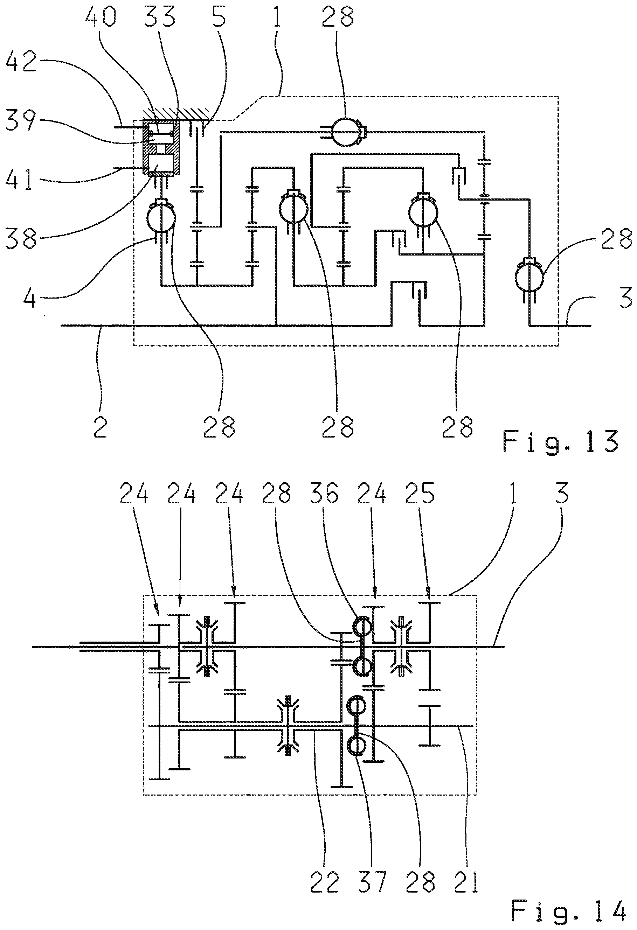

Anstelle der gemäß Figur 12 verwendeten Stahlfeder-Steifigkeit 28 kann auch eine Gasfedersteifigkeit 33 eingesetzt werden, wobei die Bremse 4 in Kraftflussrichtung vor der Gasfedersteifigkeit 33 geschaltet sein kann, wie anhand Figur 13 veranschaulicht. Hierbei weist der Verdränger 38 der Gasfeder 39 einen begrenzten Verdrehwinkel auf, wodurch eine Übertragung des Schaltsignales an die Bremse 4 relativ einfach realisierbar ist. Um das mittlere Moment abzustützen, wird der Gasfedersteifigkeit 33 über eine Ölleitung 41 in bekannter Weise Öl mit entsprechendem Druck zugeführt; die Gasfeder 39 weist einen Trennkolben 40 auf, der den Ölteil gegenüber dem Gasteil abtrennt.

In vorteilhafter Weise kann der Gasteil durch die rotationsfeste Anordnung der Gasfeder 39 im Getriebegehäuse 1 über eine Druckgasleitung 42 in seinem Gasdruck und Gasvolumen derart verändert werden, dass beliebige Federkennlinien erzeugt werden können.

Gegenstand der Figur 14 ist ein Stirnradgetriebe, bei dem in jedem Teilgetriebe, beispielsweise an den Stelle 36 auf der Getriebeausgangswelle 3 und an der Stelle 37 auf der Vorgelegewelle 21 eine Stahlfeder-Steifigkeit 28 eingebaut ist. Vorzugsweise sind die Steifigkeiten 28 zwischen den Radsätzen 24 und 25 angeordnet, die aufgrund ihrer direkten und übersetzten Trägheiten die Schwungmassen des entkoppelnden schwingungsfähigen Systems darstellen.

In vorteilhafter Weise sind in Kraftflussrichtung betrachtet vor und hinter der jeweiligen Steifigkeit 28 näherungsweise jeweils gleich viele Radsätze bzw. Radsätze mit in Summe näherungsweise gleicher Massenträgheit angeordnet, sodass die Eigenfrequenz des Kettenschwingers minimal ist und eine besonders gute Entkopplungsgüte im überkritischen Betrieb erreicht wird.

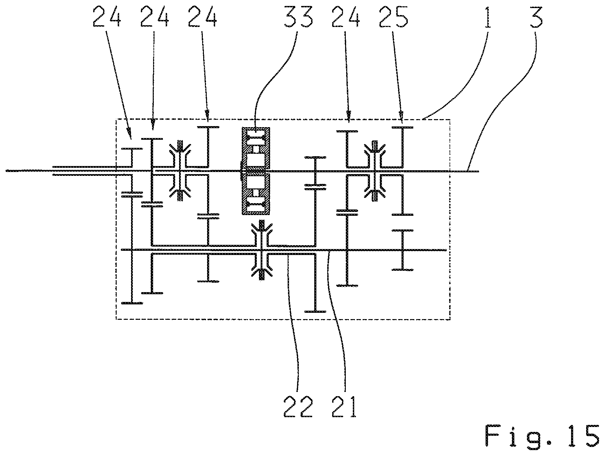

Erfindungsgemäß und bezugnehmend auf Figur 15 kann in einem Stirnradgetriebe eine Gasfedersteifigkeit 33 eingesetzt werden; vorzugsweise ist die Gasfedersteifigkeit 33 auf der aufgetrennt ausgeführten Getriebeausgangswelle 3 angeordnet, wodurch sie zusammen mit den sie umgebenden Radsätzen 24 ein Schwingungssystem gemäß Figur 14 bilden kann. Alternativ oder zusätzlich dazu kann eine Gasfedersteifigkeit 33 auch auf den Vorgelegewellen 21 und 22 angeordnet sein (nicht dargestellt), um für alle Gänge des Getriebes die Funktionalität eines Schwingungssystems zu erhalten.

Selbstverständlich fällt auch jede konstruktive Ausbildung, insbesondere jede räumliche Anordnung der Bauteile des Systems zur Schwingungsreduzierung an sich sowie zueinander und soweit technisch sinnvoll, unter den Schutzumfang der vorliegenden Ansprüche, ohne die Funktion des Systems, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Getriebegehäuse
- 2: Getriebeeingangswelle
- 3: Getriebeausgangswelle
- 4: Bremse
- 5: Bremse
- 6: Kupplung
- 7: Kupplung
- 8: Kupplung
- 9: Planetensatz
- 10: Planetensatz
- 11: Planetensatz
- 12: Planetensatz
- 13: Sonnenradträger
- 14: Hohlradträger
- 15: Planeten- und Hohlradträger
- 16: Sonnen- und Hohlradträger
- 17: Sonnen- und Hohlradträger
- 18: Planetenträger
- 19: Getriebeeingangswelle
- 20: Getriebeeingangswelle
- 21: Vorgelegewelle
- 22: Vorgelegewelle
- 23: Synchronisierungseinrichtung
- 24: Stirnradsatz
- 25: Rückwärtsgangstufe
- 26: Zusatzmasse
- 27: Schaltelement
- 28: Steifigkeit
- 29: Festfrequenztilger
- 30: drehzahladaptiver Tilger
- 31: Planetenrad
- 32: Reibeinrichtung
- 33: Gasfedersteifigkeit
- 34: Leistungspfad
- 35: Stelle zwischen zwei Bewegungsebenen bzw. Freiheitsgraden
- 36: Stelle auf der Getriebeausgangswelle 3
- 37: Stelle auf der Vorgelegewelle 21
- 38: Verdränger der Gasfeder 39
- 39: Gasfeder
- 40: Trennkolben
- 41: Ölleitung
- 42: Druckgasleitung

## Patentansprüche

1. Verfahren zur Schwingungsreduzierung im Antriebsstrang eines ein Getriebe, insbesondere ein Automatgetriebe oder ein automatisiertes Getriebe, umfassenden Kraftfahrzeugs, **dadurch gekennzeichnet, dass** im Getriebe für mehrere oder für alle Gänge des Getriebes ein dem jeweiligen Gang zugeordnetes schwingungsfähiges System zur Schwingungsentkopplung geschaffen wird, wobei die Massenträgheiten der schwingungsfähigen Systeme durch vorhandene rotierende Teile des Getriebes gebildet werden, wobei in den rotierenden Teilen Stahl- oder Gasfedersteifigkeiten (28, 33) und/oder Zusatzmassen (26) eingebracht werden und wobei durch unterschiedliche den rotierenden Bauteilen zugeordnete Stahl- oder Gasfedersteifigkeiten (28, 33) und/oder Zusatzmassen (26) gangabhängige Steifigkeiten erzeugt werden, wodurch für mehrere oder für alle Gänge des Getriebes gangabhängig ein entkoppeltes, dem jeweiligen Gang zugeordnetes schwingungsfähiges System innerhalb des Getriebes erzeugt wird, welches auf schaltungsspezifische Eigenfrequenzen und Eigenformen abgestimmt ist.

2. Verfahren nach Anspruch 1, **dadurch gekennzeichnet,**
**dass** die Stahl- oder Gasfedersteifigkeiten (28, 33) und/oder Zusatzmassen (26) mittels des vorhandenen Aktuatorsystems des Getriebes oder mittels in das Aktuatorsystem des Getriebes integrierter Aktuatoren aktiviert werden.

3. Ein Getriebe mit einem System zur Schwingungsreduzierung im Antriebsstrang eines ein Getriebe, insbesondere ein Automatgetriebe oder ein automatisiertes Getriebe umfassenden Kraftfahrzeugs, insbesondere zur Durchführung des Verfahrens nach Anspruch 1 oder 2, dadurch **gekennz eichnet,** dass es mehrere Zusatzmassen (26) und/oder Steifigkeiten (28, 33) umfasst, die an rotierenden Bauteilen des Getriebes angebracht sind, derart, dass für mehrere oder alle Gänge des Getriebes ein dem jeweiligen Gang zugeordnetes schwingungsfähiges System zur Schwingungsentkopplung entsteht, wobei die Massenträgheiten der schwingungsfähigen Systeme durch vorhandene rotierende Teile des Getriebes gebildet werden, wobei durch unterschiedliche den rotierenden Bauteilen zugeordnete Stahl- oder Gasfedersteifigkeiten (28, 33) und/oder Zusatzmassen (26) gangabhängige Steifigkeiten erzeugt werden, so dass für mehrere oder alle Gänge des Getriebes gangabhängig ein entkoppeltes, dem jeweiligen Gang zugeordnetes schwingungsfähiges System innerhalb des Getriebes erzeugt wird, welches auf schaltungsspezifische Eigenfrequenzen und Eigenformen abgestimmt ist.

4. Getriebe nach Anspruch 3, **dadurch gekennzeichnet, dass** die Zusatzmassen (26) und/oder Steifigkeiten (28, 33) mittels eines Schaltelementes (27) zu - und abschaltbar ausgeführt sind.

5. Getriebe nach Anspruch 4, **dadurch gekennzeichnet, dass** die zu- und abschaltbar ausgeführten Zusatzmassen (26) und/ oder Steifigkeiten (28, 33) mittels des Aktuatorsystems des Getriebes ansteuerbar sind.

6. Getriebe nach Anspruch 4 oder 5, **dadurch gekennzeichnet, dass** in das vorhandene Aktuatorsystem des Getriebes weitere Aktuatoren integriert sind, um die Zu- und Abschaltung der zu- und abschaltbar ausgeführten Zusatzmassen (26) und/oder Steifigkeiten (28, 33) zu ermöglichen.

7. Getriebe nach einem der Ansprüche 3 bis 6, **dadurch gekennzeichnet, dass** die Zusatzmassen (26) an der Getriebeausgangswelle (3) des Getriebes und/oder für den Fall eines Getriebes in Planetenbauweise an rotierenden Bauteilen zur Drehmomentleitung zwischen den Planetensätzen angebracht sind.

8. Getriebe nach einem der Ansprüche 3 bis 7, **dadurch gekennzeichnet, dass** die Zusatzmassen (26) in Kombination mit einer am gleichen Bauteil wie die Zusatzmassen (26) angebrachten Stahl- oder Gasfedersteifigkeit (28, 33) eingesetzt werden.

9. Getriebe nach einem der Ansprüche 3 bis 8, **dadurch gekennzeichnet, dass** die Zusatzmassen (26) über eine Steifigkeit (28) angebunden sind, wodurch ein Festfrequenztilger (29) entsteht.

10. Getriebe nach einem der Ansprüche 3 bis 9, **dadurch gekennzeichnet, dass** eine zur Steifigkeit (28) parallelgeschaltete Reibeinrichtung zur Entnahme von Schwingungsenergie vorgesehen ist.

11. Getriebe nach einem der vorangehenden Ansprüche 3 bis 10,
**dadurch gekennzeichnet, dass** im Getriebe zumindest ein drehzahladaptiver Tilger (30) vorgesehen ist, der an ein schnell rotierendes Bauteil des Getriebes befestigt ist, wodurch die Tilgermasse minimiert wird.

12. Getriebe nach Anspruch 11, **dadurch gekennzeichnet, dass** der Tilger (30) über ein Schaltelement (27) zu- und abschaltbar ausgeführt ist.

13. Getriebe nach einem der vorangehenden Ansprüche 3 bis 12,
**dadurch gekennzeichnet, dass** für den Fall eines Planetengetriebes an rotierenden Bauteilen zur Drehmomentleitung zwischen den Planetensätzen, die je nach Schaltung verschiedene rotatorische Freiheitsgrade aufweisen, zumindest eine über eine auch mit der Frequenz der überlagerten Störbeschleunigung oder mit einem Teil bzw. mit einem ganzzahligen Vielfachen derselben gepulst betreibbare Schaltkupplung (27) schaltbare Reibeinrichtung (32) zur Entnahme von Schwingungsenergie angebracht ist, wobei bei geschalteter Schaltkupplung (27) zwei rotierende Bauteile über die Reibeinrichtung (32) miteinander verbunden werden.

14. Getriebe nach einem der vorangehenden Ansprüche 3 bis 13,
**dadurch gekennzeichnet, dass** in zumindest einen Leistungsfluss im Getriebe eine Steifigkeit (28, 33) eingebaut ist.

15. Getriebe nach Anspruch 14, **dadurch gekennzeichnet, dass** die Steifigkeit (28, 33) als Stahlfeder-Steifigkeit (28) oder als Gasfedersteifigkeit (33) ausgeführt ist, wobei für den Fall einer Gasfedersteifigkeit (33) deren Hydraulikversorgung über die Hydrauliksteuerung des Getriebes erfolgt.

16. Getriebe nach einem der vorangehenden Ansprüche 3 bis 15,
**dadurch gekennzeichnet, dass** Wellen bzw. Träger (13, 14) des Getriebes, die über eine Bremse (4, 5) an ein Getriebegehäuse (1) ankoppelbar sind, über eine Steifigkeit (28) an das Getriebegehäuse (1) ankoppelbar ausgeführt sind.

17. Getriebe nach Anspruch 16, **dadurch gekennzeichnet, dass** zur Bedämpfung eine zur Steifigkeit (28) parallelgeschaltete Reibeinrichtung (32) vorgesehen ist.

18. Getriebe nach Anspruch 16 oder 17, **dadurch gekennzeichnet, dass** die Bremse (4, 5) wirkungsmäßig in Kraftflussrichtung vor der Steifigkeit (28) angeordnet ist.

19. Getriebe nach Anspruch 16, 17 oder 18, **dadurch gekennzeichnet, dass** die Steifigkeit als Stahlfeder-Steifigkeit (28) oder als Gasfedersteifigkeit (33) ausgeführt ist.

20. Getriebe nach einem der vorangehenden Ansprüche 3 bis 19,
**dadurch gekennzeichnet, dass** für den Fall eines Automatgetriebes in Planetenbauweise in zumindest einen Leistungspfad (34) oder in einer Stelle (35) zwischen zwei Bewegungsebenen bzw. Freiheitsgraden eine Gasfedersteifigkeit (33) oder eine Stahlfeder-Steifigkeit (28) angeordnet ist.

21. Getriebe nach Anspruch 20, **dadurch gekennzeichnet, dass** die Steifigkeit mittels eines Schaltelementes (27) zu- und abschaltbar ausgeführt ist.

22. Getriebe nach einem der vorangehenden Ansprüche 3 bis 21,
**dadurch gekennzeichnet, dass** für den Fall eines Stirnradgetriebes in jedem Teilgetriebe eine Stahlfeder-Steifigkeit (28) oder eine Gasfedersteifigkeit eingebaut ist.

23. Getriebe nach Anspruch 22, **dadurch gekennzeichnet, dass** die Steifigkeit (28) derart angeordnet ist, dass in Kraftflussrichtung betrachtet vor und hinter der jeweiligen Steifigkeit (28) näherungsweise jeweils gleich viele Radsätze bzw. Radsätze mit in Summe näherungsweise gleicher Massenträgheit angeordnet sind.

## Claims

1. Method for reducing vibrations in the drive train of a motor vehicle comprising a transmission, in particular an automatic transmission or an automated transmission, **characterized in that** in the transmission a vibration-capable system for decoupling vibrations which is assigned to the respective gear is created for a plurality of or for all gears of the transmission, wherein the mass inertias of the vibration-capable systems are formed by existing rotating parts of the transmission, wherein steel-spring or gas-spring rigidities (28, 33) and/or additional masses (26) are incorporated in the rotating parts, and wherein gear-dependent rigidities are generated on account of dissimilar steel-spring or gas-spring rigidities (28, 33) and/or additional masses (26) assigned to the rotating components, on account of which a decoupled vibration-capable system assigned to the respective gear is generated in a gear-dependent manner within the transmission for a plurality of or for all gears of the transmission, said vibration-capable system being tuned to switching-specific eigenfrequencies and eigenmodes.

2. Method according to Claim 1, **characterized in that** the steel-spring or gas-spring rigidities (28, 33) and/or additional masses (26) are activated by means of the existing actuator system of the transmission or by means of actuators that are integrated in the actuator system of the transmission.

3. Transmission having a system for reducing vibrations in the drive train of a motor vehicle comprising a transmission, in particular an automatic transmission or an automated transmission, in particular for carrying out the method according to Claim 1 or 2, **characterized in that** said transmission comprises a plurality of additional masses (26) and/or rigidities (28, 33) which are attached to rotating components of the transmission in such a manner that a vibration-capable system for decoupling vibrations which is assigned to the respective gear is created for a plurality of or for all gears of the transmission, wherein the mass inertias of the vibration-capable systems are formed by existing rotating parts of the transmission, wherein gear-dependent rigidities are generated on account of dissimilar steel-spring or gas-spring rigidities (28, 33) and/or additional masses (26) assigned to the rotating components such that a decoupled vibration-capable system assigned to the respective gear is generated in a gear-dependent manner within the transmission for a plurality of or for all gears of the transmission, said vibration-capable system being tuned to switching-specific eigenfrequencies and eigenmodes.

4. Transmission according to Claim 3, **characterized in that** the additional masses (26) and/or rigidities (28, 33) are embodied so as to be capable of being switched on and off by means of a switching element (27).

5. Transmission according to Claim 4, **characterized in that** the additional masses (26) and/or rigidities (28, 33) that are embodied so as to be capable of being switched on and off are actuatable by means of the actuator system of the transmission.

6. Transmission according to Claim 4 or 5, **characterized in that** further actuators are integrated in the existing actuator system of the transmission so as to enable the switching on and off of the additional masses (26) and/or rigidities (28, 33) that are embodied so as to be capable of being switched on and off.

7. Transmission according to one of Claims 3 to 6, **characterized in that** the additional masses (26) are attached to the transmission output shaft (3) of the transmission, and/or in the case of a transmission of planetary construction are attached to rotating components for introducing torque between the planet gear sets.

8. Transmission according to one of Claims 3 to 7, **characterized in that** the additional masses (26) are used in combination with a steel-spring or gas-spring rigidity (28, 33) that is attached to the same component as the additional masses (26).

9. Transmission according to one of Claims 3 to 8, **characterized in that** the additional masses (26) are linked by way of a rigidity (28) on account of which a fixed-frequency mitigator (29) is created.

10. Transmission according to one of Claims 3 to 9, **characterized in that** a friction installation for retrieving vibration energy is provided that is switched in parallel with the rigidity (28).

11. Transmission according to one of preceding Claims 3 to 10, **characterized in that** at least one rotating-speed-adaptive mitigator (30) which is fastened to a fast-rotating component of the transmission is provided in the transmission, on account of which the mitigator mass is minimized.

12. Transmission according to Claim 11, **characterized in that** the mitigator (30) is embodied so as to be capable of being switched on and off by way of a switching element (27).

13. Transmission according to one of preceding Claims 3 to 12, **characterized in that** in the case of a planetary transmission at least one friction installation (32) for retrieving vibration energy is attached to rotating components for introducing torque between the planetary gear sets, which depending on switching have dissimilar rotary degrees of freedom, said friction installation (32) being switchable by way of a shifting clutch (27) which is also capable of being operated in a pulsed manner at the frequency of the superimposed interference acceleration or at part, or at an integer multiple, respectively, of said interference acceleration, wherein in the case of a switched shifting clutch (27) two rotating components are connected to one another by way of the friction installation (32).

14. Transmission according to one of preceding Claims 3 to 13, **characterized in that** a rigidity (28, 33) is installed in at least one power flux in the transmission.

15. Transmission according to Claim 14, **characterized in that** the rigidity (28, 33) is embodied as a steel-spring rigidity (28) or as a gas-spring rigidity (33), wherein in the case of a gas-spring rigidity (33) the hydraulic supply thereof takes place by way of the hydraulic control system of the transmission.

16. Transmission according to one of preceding Claims 3 to 15, **characterized in that** shafts or supports (13, 14), respectively, of the transmission which by way of a brake (4, 5) are capable of being coupled to a transmission housing (1) are embodied so as to be capable of being coupled to the transmission housing (1) by way of a rigidity (28).

17. Transmission according to Claim 16, **characterized in that** a friction installation (32) that is switched in parallel with the rigidity (28) is provided for damping.

18. Transmission according to Claim 16 or 17, **characterized in that** the brake (4, 5) in the direction of force flux is operatively disposed ahead of the rigidity (28).

19. Transmission according to Claim 16, 17, or 18, **characterized in that** the rigidity is embodied as a steel-spring rigidity (28) or as a gas-spring rigidity (33).

20. Transmission according to one of preceding Claims 3 to 19, **characterized in that** in the case of an automatic transmission of planetary construction a gas-spring rigidity (33) or a steel-spring rigidity (28) is disposed in at least one power path (34) or in a location (35) between two movement planes or degrees of freedom, respectively.

21. Transmission according to Claim 20, **characterized in that** the rigidity is embodied so as to be capable of being switched on and off by means of a switching element (27).

22. Transmission according one of preceding Claims 3 to 21, **characterized in that** in the case of a spur gear transmission a steel-spring rigidity (28) or a gas-spring rigidity is installed in each sub-transmission.

23. Transmission according to Claim 22, **characterized in that** the rigidity (28) is disposed in such a manner that, when viewed in the direction of force flux, approximately the same number of gear sets, or gear sets which in total have an approximately identical mass inertia, respectively are disposed ahead of and behind the respective rigidity (28).

## Revendications

1. Procédé de réduction des vibrations dans la chaîne cinématique d'un véhicule automobile comprenant une boîte de vitesses, en particulier une boîte de vitesses automatique ou une boîte de vitesses automatisée, **caractérisé en ce que** dans la boîte de vitesses, un système oscillant de désaccouplement des vibrations, associé au rapport respectif, est créé pour plusieurs ou pour tous les rapports de la boîte de vitesses, les inerties de masse des systèmes oscillants étant formées par des pièces rotatives existantes de la boîte de vitesses, des rigidités de ressort pneumatique ou en acier (28, 33) et/ou des masses supplémentaires (26) étant introduites dans les pièces rotatives et par le biais des différentes rigidités de ressort pneumatique ou en acier (28, 33) et/ou par le biais des différentes masses supplémentaires (26) associées aux composants rotatifs, des rigidités dépendant du rapport étant générées, de sorte que pour plusieurs ou tous les rapports de la boîte de vitesses, un système oscillant désaccouplé, associé au rapport respectif, soit généré de manière dépendante du rapport à l'intérieur de la boîte de vitesses, lequel est adapté aux fréquences propres et aux formes propres spécifiques aux changements de rapports.

2. Procédé selon la revendication 1, **caractérisé en ce que** les rigidités de ressort pneumatique ou en acier (28, 33) et/ou les masses supplémentaires (26) sont activées au moyen du système d'actionneur existant de la boîte de vitesses ou au moyen d'actionneurs intégrés dans le système d'actionneur de la boîte de vitesses.

3. Boîte de vitesses comprenant un système de réduction des vibrations dans la chaîne cinématique d'un véhicule automobile comprenant une boîte de vitesses, en particulier une boîte de vitesses automatique ou une boîte de vitesses automatisée, en particulier pour mettre en œuvre le procédé selon la revendication 1 ou 2, **caractérisée en ce qu'**elle comprend plusieurs masses supplémentaires (26) et/ou rigidités (28, 33) qui sont appliquées à des composants rotatifs de la boîte de vitesses, de telle sorte que pour plusieurs ou tous les rapports de la boîte de vitesses soit créé un système oscillant de désaccouplement des vibrations, associé au rapport respectif, les inerties de masse des systèmes oscillants étant formées par des pièces rotatives existantes de la boîte de vitesses, par le biais des différentes rigidités de ressort pneumatique ou en acier (28, 33) et/ou par le biais des différentes masses supplémentaires (26) associées aux composants rotatifs, des rigidités dépendant du rapport étant générées, de sorte que pour plusieurs ou tous les rapports de la boîte de vitesses, un système oscillant désaccouplé, associé au rapport respectif, soit généré de manière dépendante du rapport à l'intérieur de la boîte de vitesses, lequel est adapté aux fréquences propres et aux formes propres spécifiques aux changements de rapports.

4. Boîte de vitesses selon la revendication 3, **caractérisée en ce que** les masses supplémentaires (26) et/ou les rigidités (28, 33) sont réalisées de manière à pouvoir être ajoutées et enlevées au moyen d'un élément de commutation (27).

5. Boîte de vitesses selon la revendication 4, **caractérisée en ce que** les masses supplémentaires (26) et/ou les rigidités (28, 33) réalisées de manière à pouvoir être ajoutées et enlevées peuvent être commandées au moyen du système d'actionneur de la boîte de vitesses.

6. Boîte de vitesses selon la revendication 4 ou 5, **caractérisée en ce que** dans le système d'actionneur existant de la boîte de vitesses sont intégrés des actionneurs supplémentaires pour permettre l'ajout et l'enlèvement des masses supplémentaires (26) et/ou des rigidités (28, 33) réalisées de manière à pouvoir être ajoutées et enlevées.

7. Boîte de vitesses selon l'une quelconque des revendications 3 à 6, **caractérisée en ce que** les masses supplémentaires (26) sont montées au niveau de l'arbre de sortie de boîte de vitesses (3) de la boîte de vitesses et/ou dans le cas d'une boîte de vitesses de construction planétaire, au niveau des composants rotatifs pour guider le couple entre les trains planétaires.

8. Boîte de vitesses selon l'une quelconque des revendications 3 à 7, **caractérisée en ce que** les masses supplémentaires (26) sont insérées en combinaison avec une rigidité de ressort pneumatique ou en acier (28, 33) appliquée sur le même composant que les masses supplémentaires (26) .

9. Boîte de vitesses selon l'une quelconque des revendications 3 à 8, **caractérisée en ce que** les masses supplémentaires (26) sont associées à une rigidité (28) de sorte qu'il se produise un amortisseur de fréquences fixes (29).

10. Boîte de vitesses selon l'une quelconque des revendications 3 à 9, **caractérisée en ce qu'**un dispositif de friction monté en parallèle avec la rigidité (28) est prévu pour évacuer l'énergie des vibrations.

11. Boîte de vitesses selon l'une quelconque des revendications précédentes 3 à 10, **caractérisée en ce qu'**au moins un amortisseur (30) pouvant être adapté à la vitesse de rotation est prévu dans la boîte de vitesses, lequel est fixé à un composant à rotation rapide de la boîte de vitesses, de manière à minimiser la masse de l'amortisseur.

12. Boîte de vitesses selon la revendication 11, **caractérisée en ce que** l'amortisseur (30) est réalisé de manière à pouvoir être ajouté et enlevé par le biais d'un élément de commutation (27).

13. Boîte de vitesses selon l'une quelconque des revendications précédentes 3 à 12, **caractérisée en ce que**, dans le cas d'un engrenage planétaire, au moins un dispositif de friction (32) pour évacuer l'énergie des vibrations, pouvant être commuté par le biais d'un embrayage (27) pouvant fonctionner de manière pulsée également avec la fréquence de l'accélération perturbatrice superposée ou avec une partie ou avec un multiple entier de celle-ci, est monté au niveau de composants rotatifs pour guider le couple entre les trains planétaires qui présentent, en fonction du changement de vitesses, différents degrés de liberté de rotation, deux composants rotatifs étant connectés l'un à l'autre par le biais du dispositif de friction (32) lorsque l'embrayage (27) est commuté.

14. Boîte de vitesses selon l'une quelconque des revendications précédentes 3 à 13, **caractérisée en ce qu'**une rigidité (28, 33) est incorporée dans au moins un flux de puissance dans la boîte de vitesses.

15. Boîte de vitesses selon la revendication 14, **caractérisée en ce que** la rigidité (28, 33) est réalisée sous forme de rigidité de ressort en acier (28) ou sous forme de rigidité de ressort pneumatique (33), et dans le cas d'une rigidité de ressort pneumatique (33), son alimentation en fluide hydraulique s'effectue par le biais de la commande hydraulique de la boîte de vitesses.

16. Boîte de vitesses selon l'une quelconque des revendications précédentes 3 à 15, **caractérisée en ce que** des arbres ou des supports (13, 14) de la boîte de vitesses, qui peuvent être accouplés par le biais d'un frein (4, 5) à un boîtier de la boîte de vitesses (1), sont réalisés de manière à pouvoir être accouplés au boîtier de la boîte de vitesses (1) par le biais d'une rigidité (28).

17. Boîte de vitesses selon la revendication 16, **caractérisée en ce que** l'on prévoit pour l'amortissement un dispositif de friction (32) monté en parallèle avec la rigidité (28).

18. Boîte de vitesses selon la revendication 16 ou 17, **caractérisée en ce que** le frein (4, 5) est disposé fonctionnellement dans la direction du flux de forces avant la rigidité (28).

19. Boîte de vitesses selon la revendication 16, 17 ou 18, **caractérisée en ce que** la rigidité est réalisée sous forme de rigidité de ressort en acier (28) ou sous forme de rigidité de ressort pneumatique (33).

20. Boîte de vitesses selon l'une quelconque des revendications précédentes 3 à 19, **caractérisée en ce que** dans le cas d'une boîte de vitesses automatique de construction planétaire, une rigidité de ressort pneumatique (33) ou une rigidité de ressort en acier (28) est disposée dans au moins un chemin de puissance (34) ou dans une position (35) entre deux plans de déplacement ou degrés de liberté.

21. Boîte de vitesses selon la revendication 20, **caractérisée en ce que** la rigidité est réalisée de manière à pouvoir être ajoutée et enlevée au moyen d'un élément de commutation (27).

22. Boîte de vitesses selon l'une quelconque des revendications précédentes 3 à 21, **caractérisée en ce que** dans le cas d'une boîte de vitesses à pignons droits, une rigidité de ressort en acier (28) ou une rigidité de ressort pneumatique est incorporée dans chaque boîte de vitesses partielle.

23. Boîte de vitesses selon la revendication 22, **caractérisée en ce que** la rigidité (28) est disposée de telle sorte que, vu dans la direction du flux de forces, approximativement à chaque fois le même nombre de jeux de roues ou des jeux de roues ayant une inertie de masse totale approximativement identique sont disposés avant et après la rigidité respective (28).
